# EUROPEAN PATENT APPLICATION

(11) **EP 4 625 621 A1**
(43) Date of publication of application: **01.10.2025**
(21) Application number: 25165425.7
(22) Date of filing: 21.03.2025
(51) Int. Cl.: H01M 10/647, H01M 50/15, H01M 50/176, H01M 50/553, H01M 50/562, H01M 50/564, H01G 11/76, H01M 10/627, H01M 10/617, H01M 10/6553

(54) **TERMINAL-POST ASSEMBLY, ENERGY-STORAGE APPARATUS, AND ELECTRICITY-CONSUMPTION DEVICE**

(30) Priority: 27.03.2024 CN 202410361911
(71) Applicant: Xiamen Hithium Energy Storage Technology Co., Ltd., Xiamen, Fujian 361100 (CN)
(72) Inventor: XIAO, Hepan, Xiamen, Fujian, 361100 (CN); JIN, Dongming, Xiamen, Fujian, 361100 (CN)
(74) Representative: Ipside

(57) **Abstract**

A terminal-post assembly, an energy-storage apparatus, and an electricity-consumption device are disclosed in the present disclosure. The terminal-post assembly includes a first terminal-post and a first flange connected to one end of the first terminal-post. The first terminal-post includes a first member and a second member stacked with and connected to the first member, and the second member is connected to the first flange. A material of the first member is different from a material of the second member, and a connection interface between the first member and the second member is a curved surface. The first terminal-post is configured to connect to an electrode assembly in an energy-storage apparatus, and the first flange is configured to connect to a first busbar.

## Description

### TECHNICAL FIELD

This disclosure relates to the field of energy-storage technology, and in particular, to a terminal-post assembly, an energy-storage apparatus, and an electricity-consumption device.

### BACKGROUND

A secondary battery, also known as a rechargeable battery or a storage battery, refers to a battery that can continue to be used by activating active substance by means of charging after the battery is discharged. The recyclable characteristics of the secondary battery make it gradually become a main power source for an electricity-consumption device. With the gradual increase in the demand for the secondary battery, people have higher requirements for the reliability of the secondary battery.

One end of a terminal-post of the battery is connected to a flange, and the other end of the terminal-post is configured to connect to an electrode assembly in the battery. However, a current terminal-post structure easily leads to concentrated heat generation, which affects the reliability of the terminal-post.

### SUMMARY

A terminal-post assembly is provided in the present disclosure. During operation, the terminal-post assembly generates heat uniformly and is not prone to concentrated heat generation.

A terminal-post assembly is provided in the present disclosure. During operation, the terminal-post assembly generates heat uniformly and is not prone to concentrated heat generation.

The terminal-post assembly includes a first terminal-post and a first flange connected to one end of the first terminal-post. The first terminal-post includes a first member and a second member stacked with and connected to the first member, and the second member is connected to the first flange. A material of the first member is different from a material of the second member, and a connection interface between the first member and the second member is a curved surface. The first terminal-post is configured to connect to an electrode assembly in an energy-storage apparatus, and the first flange is configured to connect to a first busbar.

It may be understood that in embodiments of the present disclosure, the connection interface between the first member and the second member in the first terminal-post is a wavy interface, so that heat can be uniformly generated at the connection interface between the first member and the second member during operation of the first terminal-post, thereby avoiding the problem of concentrated heat generation at the connection interface caused by different materials of the first member and the second member. In addition, compared with a solution in which the connection interface between the first member and the second member is a plane, a contact surface between the first member and the second member in embodiments of the present disclosure is a curved surface, and thus a contact area between the first member and the second member is relatively large, and the conductivity between the first member and the second member is relatively good (i.e., a contact area between a copper layer and an aluminum layer is relatively large, and the conductivity between the copper layer and the aluminum layer is relatively good), so that the reliability of the energy-storage apparatus is relatively good.

In an embodiment, the material of the second member is the same as a material of the first flange. The material of the first member includes copper, and the material of the second member includes aluminum.

As such, when the first member is connected to the electrode assembly in the energy-storage apparatus through a connection sheet, since both the first member and the connection sheet are made of copper, the reliability of laser welding between the first terminal-post and the connection sheet is good, and a second part is not easy to fall off the connection sheet. Therefore, the conductivity between the first terminal-post and the electrode assembly in the energy-storage apparatus can be ensured, which is conducive to improving the reliability of the energy-storage apparatus.

When the first flange is connected to the first busbar, since both the first flange and the first busbar are made of aluminum, the reliability of laser welding between the first flange and the first busbar is good, and the first flange is not easy to fall off the first busbar. Therefore, the conductivity between the first terminal-post and the first busbar can be ensured, which is conducive to improving the reliability of the energy-storage apparatus.

In an embodiment, the first terminal-post includes a first part and a second part, and the second part is connected to a surface of one side of the first part. The first part includes part of the first member and at least part of the second member, and the second part at least includes the other part of the first member.

The first part is configured to connect to the first flange. The second part may be configured to connect to the electrode assembly in the energy-storage apparatus.

In an embodiment, the first part is polygonal prism-shaped.

In embodiments of the present disclosure, the first part is configured to connect to a top cover compatibly. Compared with a solution in which the first terminal-post is cylindrical, in the present disclosure, the first terminal-post is set to be polygonal prism-shaped, so that when the first terminal-post is connected to the top cover compatibly, the first terminal-post is not easily rotated relative to the top cover. In this way, the torsional strength of the first terminal-post can be improved, which is conducive to preventing a part of a lower plastic member positioned between the first terminal-post and a top cover body from being cut.

In an embodiment, the first part has a first top surface facing the second part and connected to the second part. The first part further has six first side surfaces connected in sequence, the six first side surfaces are all connected to the first top surface, and the six first side surfaces are distributed symmetrically around a central axis of the first terminal-post. The first top surface is a surface of the first member away from the first flange, one part of each of the six first side surfaces is located on or serves as the first member, and the other part of each of the six first side surfaces is located on or serves as the second member.

As such, the copper layer may extend from the second part to the first part, so that an area of the copper layer of the first terminal-post is large, and the conductivity of the first terminal-post is good. In addition, since the heating speed of copper is less than the heating speed of aluminum, by increasing an area of the copper material of the first terminal-post and reducing an area of the aluminum material of the first terminal-post, the first terminal-post is not prone to heat generation, which is conducive to improving the reliability of the energy-storage apparatus.

In an embodiment, in a thickness direction of the first terminal-post, a length of the first member at a joint between two adjacent first side surfaces is greater than a length of the first member at each of the six first side surfaces.

In this embodiment, since the heating speed of copper is less than the heating speed of aluminum, by increasing an area of the copper material and reducing an area of the aluminum material at the joint between the two adjacent first side surfaces, heat is not easily generated at the joint between the two adjacent first side surfaces, which is conducive to improving the reliability of the energy-storage apparatus.

In an embodiment, a chamfer *R₀₁* is defined at a joint between two adjacent first side surfaces, and the chamfer *R₀₁* has a radius ranging from 0.5 mm to 5.0 mm.

As such, in the manufacturing process of the first terminal-post, the abrasion of a mold can be reduced, and the flow of the material can also be facilitated, thereby improving the manufacturing process yield of the first terminal-post. In addition, the flow resistance of the material during stamping of the first terminal-post can be reduced, and the copper layer of the first part is not prone to breakage, thereby avoiding the occurrence of the aluminum layer and the copper layer with aluminum powder in the first part.

In an embodiment, a chamfer *R₀₂* is defined at a joint between the first top surface and each of the six first side surfaces, and the chamfer *R₀₂* has a radius ranging from 0.1 mm to 1 mm.

As such, the manufacturing process difficulty of the first terminal-post can be reduced, and the flow of the material in the manufacturing process of the first terminal-post can be facilitated.

In an embodiment, in a direction from the first part to the second part, each of the six first side surfaces is inclined towards a center of the first terminal-post.

As such, in the manufacturing process of the first terminal-post, the abrasion of a mold can be reduced, and the flow of the material can also be facilitated, thereby improving the manufacturing process yield of the first terminal-post. In addition, the flow resistance of the material during stamping of the first terminal-post can be reduced, and a surface layer of the first part is not prone to breakage.

In an embodiment, an angle of each of the six first side surfaces with respect to a thickness direction of the top cover ranges from 0.05° to 5°.

In an embodiment, the first terminal-post and the first flange are an integrally-formed structural member.

As such, the conductivity between the first terminal-post and the first flange is good, and the problem of concentrated heat generation does not easily occur. In addition, a forming process of the first terminal-post and the first flange is simple, and the cost is low.

An energy-storage apparatus is further provided in the present disclosure. The energy-storage apparatus includes a housing and an end cover assembly. The end cover assembly is mounted on the housing and is configured to seal an opening of the housing. The end cover assembly includes a top cover, a lower plastic member, and the terminal-post assembly as described above. The top cover defines a first through-hole. The lower plastic member defines a first terminal-post through-hole. The lower plastic member is positioned at one side of the top cover and is stacked with and connected to the top cover. The first terminal-post through-hole is positioned in alignment with the first through-hole, and the first terminal-post penetrates through the first through-hole and the first terminal-post through-hole. A shape of the first through-hole and a shape of the first terminal-post through-hole each match a shape of the first part of the first terminal-post.

It may be understood that, the first part is configured to penetrate through the first through-hole and the first terminal-post through-hole and is connected to the top cover compatibly. Compared with a solution in which a terminal-post is cylindrical, in the present disclosure, the first terminal-post is set to be polygonal prism-shaped, and both the shape of the first through-hole and the shape of the first terminal-post through-hole are also set to be a shape corresponding to the first terminal-post, so that when the first terminal-post is connected to the top cover compatibly, the first terminal-post is not easily rotated relative to the top cover. In this way, the torsional strength of the first terminal-post can be improved, which is conducive to preventing a part of the lower plastic member positioned between the first terminal-post and a top cover body from being cut.

In an embodiment, the top cover includes a top cover body. In a thickness direction of the top cover body, the top cover body has a front face and a back face opposite to the front face, and the first through-hole extends through the front face and the back face. The top cover further includes a first boss, the first boss protrudes from the front face, and the first through-hole further extends through the first boss. The first boss has a first peripheral side surface, and in a direction from the back face to the front face, the first peripheral side surface is inclined towards the first through-hole with respect to a thickness direction of the top cover.

In this embodiment, with the arrangement of the first boss at an edge of the first through-hole, a height of a hole wall of the first through-hole is increased, and thus a connection area between the first terminal-post and the top cover is increased, which is conducive to preventing twisting of the first terminal-post relative to the top cover, thereby reducing cutting of the lower plastic member.

In an embodiment, an angle of the first peripheral side surface with respect to the thickness direction of the top cover ranges from 5° to 60°.

In the process of forming the first boss on the top cover by upsetting, the flow of the material to the first through-hole can be easily realized, thereby reducing the abrasion of a stamping mold caused by the top cover, improving the product yield and the service life of the mold, and reducing the production of metal wire.

An electricity-consumption device is further provided in the present disclosure. The electricity-consumption device includes the energy-storage apparatus as described above. The energy-storage apparatus is configured to store electric energy.

A production method of a first terminal-post in a terminal-post assembly is further provided in the present disclosure. The terminal-post assembly includes the first terminal-post. The first terminal-post includes a first member and a second member stacked with and connected to the first member. A material of the first member is different from a material of the second member, and a connection interface between the first member and the second member is a curved surface. The production method includes the following. At S100, blanking is performed on a copper-aluminum composite plate to form a first blank. At S200, after operations at S100, the first blank is stamped to form a second blank, where the second blank includes the first member. At S300, after operations at S200, the second blank is stamped to form a third blank, where the third blank includes the first member and the second member.

The above production method has a simple process and a high manufacturing process yield. The first terminal-post produced by the above production method uses less copper and has low cost, and the first terminal-post has a small weight.

### BRIEF DESCRIPTION OF THE DRAWINGS

In order to describe technical solutions in the present disclosure more clearly, the following will give a brief introduction to accompanying drawings required for describing the embodiments. Apparently, the accompanying drawings hereinafter described merely illustrate some embodiments of the present disclosure. Based on the accompanying drawings, those of ordinary skill in the art can also obtain other drawings without creative effort.
FIG. 1 is an application scenario view of an energy-storage apparatus provided in embodiments of the present disclosure.
FIG. 2 is a schematic perspective structural view of the energy-storage apparatus illustrated in FIG. 1.
FIG. 3 is a schematic structural view of an end cover assembly illustrated in FIG. 2.
FIG. 4 is an exploded schematic structural view illustrating part of the end cover assembly illustrated in FIG. 3.
FIG. 5 is an exploded schematic structural view illustrating part of the end cover assembly illustrated in FIG. 3, viewed from another direction.
FIG. 6A is a schematic structural view of a first terminal-post and a first flange illustrated in FIG. 4.
FIG. 6B is a schematic structural view illustrating part of the first terminal-post and the first flange illustrated in FIG. 6A, taken along a direction.
FIG. 7A is a schematic structural view of a second terminal-post and a second flange illustrated in FIG. 4.
FIG. 7B is a schematic structural view illustrating part of the second terminal-post and the second flange illustrated in FIG. 7A, taken along a direction.
FIG. 8 is a partial enlarged view of the end cover assembly at Circle M in FIG. 4.
FIG. 9 is a schematic structural view illustrating part of an end cover assembly illustrated in FIG. 2, taken along a direction.
FIG. 10 is a schematic view illustrating production operations of the first terminal-post and the first flange illustrated in FIG. 6A in some embodiments.
FIG. 11 is a view illustrating a production process of the first terminal-post and the first flange illustrated in FIG. 6A in some embodiments.
FIG. 12 is a schematic view of a state in a manufacturing process of the first terminal-post and the first flange illustrated in FIG. 11.
FIG. 13 is a schematic view of another state in a manufacturing process of the first terminal-post and the first flange illustrated in FIG. 11.
FIG. 14 is a schematic view of another state in a manufacturing process of the first terminal-post and the first flange illustrated in FIG. 11.

Reference signs: 2000: electric-energy conversion apparatus, 3000: wind-energy conversion apparatus, 4000: power grid, 1000: energy-storage apparatus, 5000: first busbar, 6000: second busbar, 400: housing, 100: end cover assembly, 500: electrode assembly,10: top cover, 11: top cover body, 111: front face, 112: back face, 12: first through-hole, 121: first mounting recess, 124: first boss, 1241: first-boss top surface, 1242: first peripheral side surface, 13: second through-hole, 131: second mounting recess, 134: second boss, 1341: second-boss top surface, 1342: second peripheral side surface, 14: explosion-proof valve, 15: liquid-injection hole, 16: explosion-proof valve protection sheet, 20: lower plastic member, 21: lower-plastic-member body, 211: first surface, 212: second surface, 22: first terminal-post through-hole, 221: first accommodating recess, 221A: first snapped protrusion, 23: second terminal-post through-hole, 231: second accommodating recess, 231A: second snapped protrusion, 30: first terminal-post, 301: first part, 3011: first top surface, 3012: first side surface, 33: first member, 34: second member, 302: second part, 31: first flange, 40: second terminal-post, 401: third part, 4011: second top surface, 4012: second side surface, 402: fourth part, 41: second flange, 51: first pressing ring, 52: second pressing ring, 61: first upper plastic member, 611: first body portion, 612: first inner-ring portion, 613: first outer-ring portion, 614: first limiting groove, 62: second upper plastic member, 621: second body portion, 622: second inner-ring portion, 623: second outer-ring portion, 624: second limiting groove, 71: first sealing member, 72: second sealing member, 30a: first blank, 30b: second blank, 30c: third blank, 31a: third part, 33a: copper layer, 34a: aluminum layer.

### DETAILED DESCRIPTION

The following will describe technical solutions of embodiments of the present disclosure clearly and completely with reference to the accompanying drawings in embodiments of the present disclosure. Apparently, embodiments described herein are merely some embodiments, rather than all embodiments, of the present disclosure. Based on the embodiments of the present disclosure, all other embodiments obtained by those of ordinary skill in the art without creative effort shall fall within the protection scope of the disclosure.

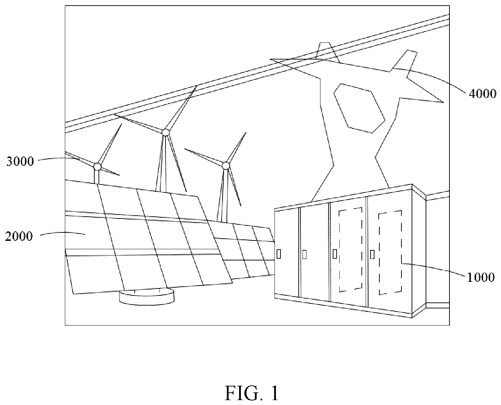

Reference can be made to FIG. 1, where FIG. 1 is an application scenario view of an energy-storage apparatus 1000 provided in embodiments of the present disclosure. The energy-storage apparatus 1000 provided in embodiments of the present disclosure is applied to an energy-storage system. The energy-storage system includes an electric-energy conversion apparatus 2000 (photovoltaic panel), a wind-energy conversion apparatus 3000 (wind turbine), a power grid 4000, and the energy-storage apparatus 1000. The energy-storage apparatus 1000 can be implemented as an energy-storage cabinet and can be mounted outdoors. Specifically, the electric-energy conversion apparatus 2000 (photovoltaic panel) can convert solar energy into electric energy during the low electricity price period, and the energy-storage apparatus 1000 is configured to store the electric energy, and to supply power to the power grid 4000 during the peak hours of energy consumption or to supply power when the power grid 4000 is powered off/out of power. The wind-energy conversion apparatus 3000 (wind turbine) can convert wind energy into electric energy, and the energy-storage apparatus 1000 is configured to store the electric energy, and to supply power to the power grid 4000 during the peak hours of energy consumption or to supply power when the power grid 4000 is powered off/out of power. The electric energy can be transmitted through high-voltage cables.

It may be understood that, the energy-storage apparatus 1000 may include, but is not limited to, a battery cell, a battery module, a battery pack, a battery system, etc. An actual application form of the energy-storage apparatus 1000 provided in embodiments of the present disclosure may be, but is not limited to, the products listed, and may also be other application forms. The application form of the energy-storage apparatus 1000 is not strictly limited in embodiments of the present disclosure. There may be multiple energy-storage apparatuses 1000, the multiple energy-storage apparatuses 1000 are connected in series or in parallel, and the multiple energy-storage apparatuses 1000 are supported and electrically connected by isolation plates (not illustrated). In this embodiment, "multiple" or "a plurality of" refers to two or more.

For illustrative purposes, in embodiments of the present disclosure, the energy-storage apparatus 1000 is merely a multi-cell battery.

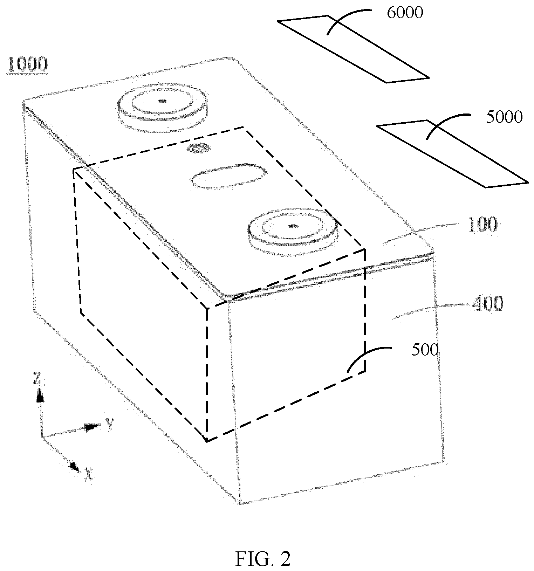

Reference can be made to FIG. 2, where FIG. 2 is a schematic perspective structural view of the energy-storage apparatus 1000 illustrated in FIG. 1.

In some embodiments, the energy-storage apparatus 1000 includes a housing 400, an end cover assembly 100, and an electrode assembly 500. The housing 400 defines an opening and an accommodating chamber, and the accommodating chamber of the housing 400 is in communication with the opening of the housing 400. The electrode assembly 500 is accommodated in the accommodating chamber. The end cover assembly 100 is mounted on the housing 400 and is configured to seal the opening of the housing 400. The end cover assembly 100 is mounted at one end of the electrode assembly 500 and is electrically connected to the electrode assembly 500. For ease of description, a length direction of the end cover assembly 100 illustrated in FIG. 2 is denoted as an X-axis direction, a width direction of the end cover assembly 100 is denoted as a Y-axis direction, a thickness direction of the end cover assembly 100 is denoted as a Z-axis direction, and the X-axis direction, the Y-axis direction, and the Z-axis direction are perpendicular to each other. The terms such as "upper" and "lower" mentioned in the description of embodiments of the present disclosure are described according to directions as illustrated in FIG. 2 of the description, where a direction towards a positive direction of Z-axis is "upper", and a direction towards a negative direction of Z-axis is "lower", which do not constitute a limitation to the energy-storage apparatus 1000 in actual application scenarios. The terms "same" and "perpendicular" used in the following are subject to certain tolerances.

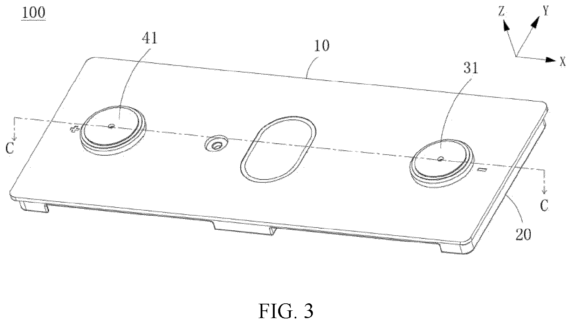

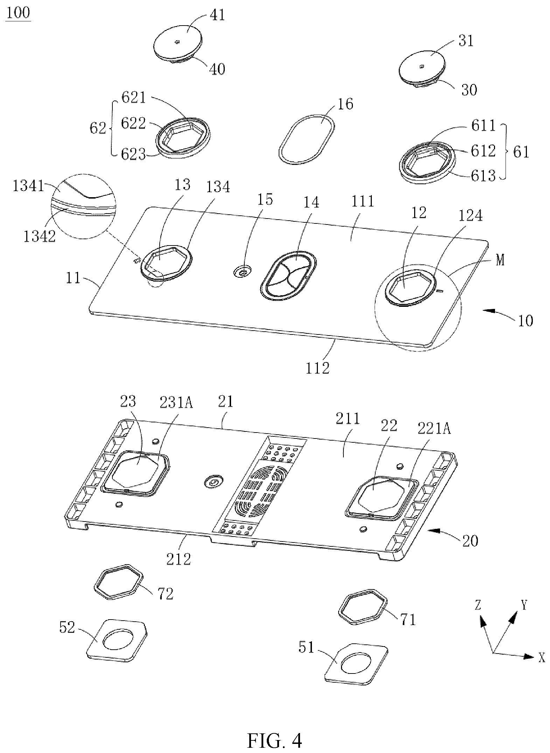

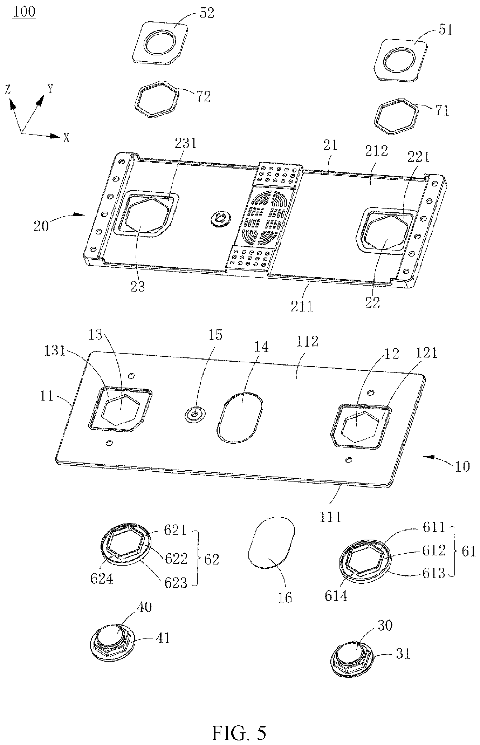

Reference can be made to FIG. 3, FIG. 4, and FIG. 5, where FIG. 3 is a schematic structural view of an end cover assembly 100 illustrated in FIG. 2, FIG. 4 is an exploded schematic structural view illustrating part of the end cover assembly 100 illustrated in FIG. 3, and FIG. 5 is an exploded schematic structural view illustrating part of the end cover assembly 100 illustrated in FIG. 3, viewed from another direction.

In this embodiment, the end cover assembly 100 includes a top cover 10, a lower plastic member 20, a first terminal-post 30, a second terminal-post 40, a first pressing ring 51, and a second pressing ring 52. In this embodiment, the top cover 10 is a smooth aluminum sheet, and the lower plastic member 20 is plastic and insulated. The lower plastic member 20 is mounted at one side of the top cover 10. The first terminal-post 30 and the second terminal-post 40 each are configured to electrically connect to an electrode assembly 500. Exemplarily, one end of the first terminal-post 30 is connected to a first flange 31. One end of the second terminal-post 40 is connected to a second flange 41. It may be noted that, the first terminal-post 30 may be a positive terminal-post, the second terminal-post 40 may be a negative terminal-post, the first flange 31 may be a positive flange, and the second flange 41 may be a negative flange. Alternatively, the first terminal-post 30 may be a negative terminal-post, the second terminal-post 40 may be a positive terminal-post, the first flange 31 may be a negative flange, and the second flange 41 may be a positive flange.

In embodiments of the present disclosure, for example, the first terminal-post 30 is a negative terminal-post, and the first flange 31 is a negative flange. The first terminal-post 30 is a composite terminal-post, and the first terminal-post 30 and the first flange 31 cooperate to form a terminal-post assembly. It may be understood that, the composite terminal-post contains at least two different materials. The composite terminal-post may be formed from a composite plate containing at least two different materials through a stamping process, or may be formed from at least two different materials through an injection molding process. A structure and a forming process of the composite terminal-post are not limited in the present disclosure. The second terminal-post 40 may be a composite terminal-post or may contain only one material.

Exemplarily, the top cover 10 includes a top cover body 11, an explosion-proof valve 14, and a liquid-injection hole 15. The top cover body 11 is a long thin plate, and in a thickness direction of the top cover body 11 (i.e., Z-axis direction), the top cover body 11 has a front face 111 and a back face 112 opposite to the front face 111. The top cover 10 defines a first through-hole 12 and a second through-hole 13. The first through-hole 12 and the second through-hole 13 each extend through the front face 111 and the back face 112 of the top cover body 11, that is, the first through-hole 12 and the second through-hole 13 each extend through the top cover body 11. The first through-hole 12 is positioned at one of two opposite ends (arranged in an X-axis direction) of the top cover body 11 and is configured to allow the first terminal-post 30 to pass through, and the second through-hole 13 is positioned at the other one of the two opposite ends of the top cover body 11 and is configured to allow the second terminal-post 40 to pass through.

Exemplarily, shapes of both the first through-hole 12 and the second through-hole 13 are a hexagon, so as to match shapes of the first terminal-post 30 and the second terminal-post 40 respectively. As such, when the first terminal-post 30 and the second terminal-post 40 are connected to the top cover 10, the first terminal-post 30 and the second terminal-post 40 are not easily rotated relative to the top cover 10, which is conducive to improving the torsional strength of the first terminal-post 30 and the second terminal-post 40. In embodiments of the present disclosure, the shapes of the first through-hole 12 and the second through-hole 13 can be changed correspondingly with a shape of the first terminal-post 30, and the shapes of the first through-hole 12 and the second through-hole 13 may be a polygon other than the hexagon, a circle, a special shape, or the like, which is not limited in the present disclosure.

Exemplarily, in a length direction of the top cover 10, i.e., the X-axis direction, the second through-hole 13, the liquid-injection hole 15, the explosion-proof valve 14, and the first through-hole 12 are arranged in sequence and spaced apart from each other. The explosion-proof valve 14 is positioned in the middle of the top cover body 11. When pressure inside the energy-storage apparatus 1000 is excessively high, the explosion-proof valve 14 can automatically open to release the pressure to prevent an explosion. The liquid-injection hole 15 is positioned between the second through-hole 13 and the explosion-proof valve 14. In a liquid-injection process of a power battery, electrolyte is injected into the battery through the liquid-injection hole 15 on the top cover 10.

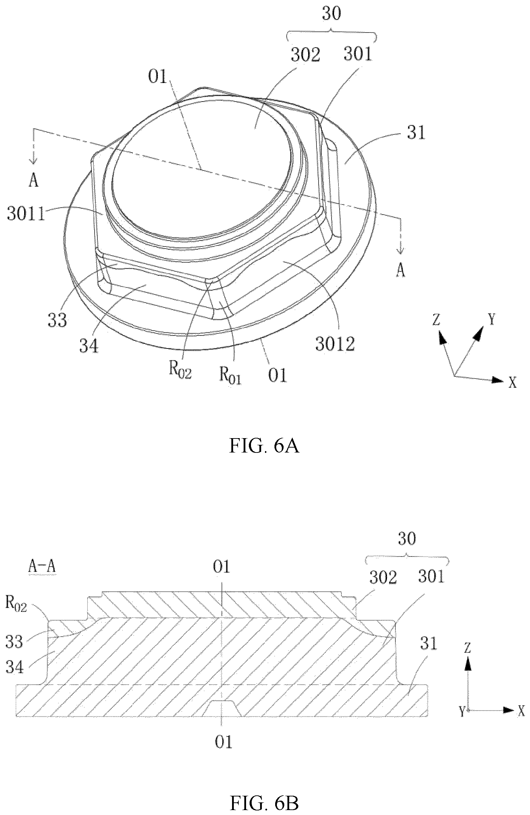

Reference can be made to FIG. 5, FIG. 6A, and FIG. 6B, where FIG. 6A is a schematic structural view of a first terminal-post 30 and a first flange 31 illustrated in FIG. 4, and FIG. 6B is a schematic structural view illustrating part of the first terminal-post 30 and the first flange 31 illustrated in FIG. 6A, taken along a direction.

In this embodiment, at least part of the first terminal-post 30 is a hexagonal prism. It may be understood that, part of the first terminal-post 30 may be the hexagonal prism, or all of the first terminal-post 30 may be the hexagonal prism. Exemplarily, the first terminal-post 30 includes a first part 301 and a second part 302. In FIG. 6B, the first part 301, the second part 302, and the first flange 31 are schematically distinguished by using dashed lines. The second part 302 is connected to a surface of one side of the first part 301, and the first part 301 is coaxial with the second part 302. The first part 301 is the hexagonal prism. For example, the first part 301 may be a regular hexagonal prism, and the first part 301 has a centrosymmetric structure with respect to a central axis 01-01 of the first terminal-post 30. The second part 302 is a cylinder. In a height direction of the first terminal-post 30 (i.e., Z-axis direction), a projection area of the second part 302 is less than a projection area of the first part 301. The first part 301 is configured to penetrate through the first through-hole 12 and is connected to the top cover 10 compatibly, so as to achieve high torsional strength. The second part 302 is configured to connect to the first pressing ring 51 compatibly. The second part 302 is further configured to electrically connect to an electrode assembly 500 in the energy-storage apparatus 1000. In some examples, the second part 302 may be electrically connected to the electrode assembly 500 in the energy-storage apparatus 1000 through a connection sheet.

In this embodiment, the first flange 31 is a cylinder. The first flange 31 is configured to connect to a first busbar 5000. The first busbar 5000 may be a negative busbar. The first flange 31 is positioned at one side of the first part 301 away from the second part 302 and is connected to the first part 301. The first part 301 may be positioned at the middle of the first flange 31. The first terminal-post 30 and the first flange 31 are an integrally-formed structural member. The first terminal-post 30 and the first flange 31 can be formed through a stamping process. As such, the conductivity between the first terminal-post 30 and the first flange 31 is good, and the problem of concentrated heat generation does not easily occur. In addition, a forming process of the first terminal-post 30 and the first flange 31 is simple, and the cost is low.

**In** some embodiments, the first terminal-post 30 includes a first member 33 and a second member 34 stacked with and connected to the first member 33. Exemplarily, the first member 33 and the second member 34 are arranged in a thickness direction of the first terminal-post 30 (Z-axis direction). The first member 33 is configured to connect to the electrode assembly 500 in the energy-storage apparatus 1000. A surface of the second member 34 away from the first member 33 is connected to the first flange 31. The second member 34 and the first flange 31 are an integrally-formed structural member.

Exemplarily, the first part 301 of the first terminal-post 30 is composed of part of the first member 33 and part of the second member 34. That is, the first part 301 includes part of the first member 33 and part of the second member 34. The second part 302 of the first terminal-post 30 may be composed of the other part of the first member 33 and part of the second member 34. That is, the second part 302 includes the other part of the first member 33 and the other part of the second member 34. The part of the first member 33 in the second part 302 is configured to connect to the electrode assembly 500 in the energy-storage apparatus 1000. Certainly, in other embodiments, the first part 301 is composed of part of the first member 33 and all of the second member 34. That is, the first part 301 includes part of the first member 33 and all of the second member 34. The second part 302 of the first terminal-post 30 may also be composed of only the first member 33, that is, the second part 302 only includes the other part of the first member 33.

In embodiments of the present disclosure, a material of the first member 33 is different from a material of the second member 34. The material of the second member 34 is the same as a material of the first flange 31.

Exemplarily, the first member 33 is made of copper. It may be understood that, a connection sheet for electrically connecting the first terminal-post 30 and the electrode assembly 500 in the energy-storage apparatus 1000 is generally made of copper. When the part of the first member 33 in the second part 302 is connected to the electrode assembly 500 in the energy-storage apparatus 1000 through the connection sheet, since both the first member 33 and the connection sheet are made of copper, the reliability of laser welding between the first terminal-post 30 and the connection sheet is good, and the first terminal-post 30 is not easy to fall off the connection sheet. Therefore, the conductivity between the first terminal-post 30 and the electrode assembly 500 in the energy-storage apparatus 1000 can be ensured, which is conducive to improving the reliability of the energy-storage apparatus 1000.

In the present disclosure, the material of the first member 33 is the same as a material of a connection sheet for connecting the second part 302 and the electrode assembly 500 in the energy-storage apparatus 1000. Therefore, when the material of the connection sheet is changed (for example, a metal material other than copper is used), the material of the first member 33 can be changed correspondingly with the material of the connection sheet.

In embodiments of the present disclosure, both the second member 34 and the first flange 31 are made of aluminum. It may be understood that, in order to reduce cost, a first busbar 5000 of a battery is generally made of aluminum. When the first flange 31 is connected to the first busbar, since both the first flange 31 and the first busbar 5000 are made of aluminum, the reliability of laser welding between the first flange 31 and the first busbar 5000 is good, and the first flange 31 is not easy to fall off the first busbar 5000. Therefore, the conductivity between the first terminal-post 30 and the first busbar 5000 can be ensured, which is conducive to improving the reliability of the energy-storage apparatus 1000.

In the present disclosure, the material of the second member 34 and the material of the first flange 31 are the same as the material of the first busbar 5000. Therefore, when the material of the first busbar 5000 is changed (for example, a metal material other than aluminum is used), the material of the second member 34 and the material of the first flange 31 can be changed correspondingly with the material of the first busbar 5000.

It may be understood that in embodiments of the present disclosure, a copper layer extends from the second part 302 to the first part 301. In this case, an area of the copper material of the first terminal-post 30 is large, and the conductivity of the first terminal-post 30 is good. In addition, since the heating speed of copper is less than the heating speed of aluminum, by increasing the area of the copper material of the first terminal-post 30 and reducing an area of the aluminum material of the first terminal-post 30, the first terminal-post 30 is not prone to heat generation, which is conducive to improving the reliability of the energy-storage apparatus 1000.

In this embodiment, a connection interface between the first member 33 and the second member 34 is a curved surface. It may be understood that in the present disclosure, the connection interface between the first member 33 and the second member 34 is set to be a wavy interface, so that heat can be uniformly generated at the connection interface between the first member 33 and the second member 34 during operation of the first terminal-post 30, thereby avoiding the problem of concentrated heat generation at the connection interface caused by different materials of the first member 33 and the second member 34. In addition, compared with a solution in which the connection interface between the first member 33 and the second member 34 is a plane, a contact surface between the first member 33 and the second member 34 in embodiments of the present disclosure is a curved surface, and thus a contact area between the first member 33 and the second member 34 is relatively large, and the conductivity between the first member 33 and the second member 34 is relatively good (i.e., a contact area between a copper layer and an aluminum layer is relatively large, and the conductivity between the copper layer and the aluminum layer is relatively good), so that the reliability of the energy-storage apparatus 1000 is relatively good.

In this embodiment, the first part 301 of the first terminal-post 30 has a first top surface 3011 facing the second part 302 and connected to the second part 302. The first part 301 further has six first side surfaces 3012 connected in sequence, and the six first side surfaces 3012 are all connected to the first top surface 3011. The six first side surfaces 3012 are distributed symmetrically around a central axis 01-01 of the first terminal-post 30.

The first top surface 3011 is a surface of the first member 33 away from the first flange 31. One part of each of the six first side surfaces 3012 is located on or serves as the first member 33, and the other part of each of the six first side surfaces 3012 is located on or serves as the second member 34. That is, the first member 33 includes one part of each of the six first side surfaces 3012 of the first part 301, and the second member 34 includes the other part of each of the six first side surfaces 3012 of the first part 301.

In a thickness direction of the first terminal-post 30 (Z-axis direction), a length of the first member 33 at a joint between two adjacent first side surfaces 3012 is greater than a length of the first member 33 at each of the six first side surfaces 3012. That is, an area of the copper material at the joint between the two adjacent first side surfaces 3012 is greater than an area of the copper material at each of the six first side surfaces 3012. It may be understood that, since the heating speed of copper is less than the heating speed of aluminum, by increasing an area of the copper and reducing an area of the aluminum at the joint between the two adjacent first side surfaces 3012, heat is not easily generated at the joint between the two adjacent first side surfaces 3012, which is conducive to improving the reliability of the energy-storage apparatus 1000.

In this embodiment, round chamfering is performed between every two adjacent first side surfaces 3012 of the six first side surfaces 3012, that is, there is a smooth transition between every two adjacent first side surfaces 3012 of the six first side surfaces 3012. As such, in the manufacturing process of the first terminal-post 30, the abrasion of a mold can be reduced, and the flow of the material can also be facilitated, thereby improving the manufacturing process yield of the first terminal-post 30. In addition, the flow resistance of the material during stamping of the first terminal-post 30 can be reduced, and the copper layer of the first part 301 is not prone to breakage, thereby avoiding the occurrence of the aluminum layer and the copper layer with aluminum powder in the first part 301. Exemplarily, round chamfering is performed at a joint between two adjacent first side surfaces 3012, and a chamfer *R₀₁* is defined, that is, there is a smooth transition between every two adjacent first side surfaces 3012 of the six first side surfaces 3012. The chamfer *R₀₁* has a radius ranging from 0.5 mm to 5.0 mm. For example, the chamfer *R₀₁* may have a radius ranging from 1.5 mm to 2.5 mm.

In this embodiment, round chamfering is performed at a joint between the first top surface 3011 and each of the first side surfaces 3012. Exemplarily, round chamfering is performed between the first top surface 3011 and each of the six first side surfaces 3012, that is, there is a smooth transition between the first top surface 3011 and each of the first side surfaces 3012. As such, the manufacturing process difficulty of the first terminal-post 30 can be reduced, and the flow of the material in the manufacturing process of the first terminal-post 30 can be facilitated. Exemplarily, a chamfer *R₀₂* is defined at a joint between the first top surface 3011 and each of the first side surfaces 3012. The chamfer *R₀₂* has a radius ranging from 0.1 mm to 1 mm. For example, the chamfer *R₀₂* has a radius ranging from 0.25 mm to 0.5 mm.

In this embodiment, in a direction from the first flange 31 to the first terminal-post 30 (i.e., in a direction from the first part 301 to the second part 302), each of the first side surfaces 3012 is inclined towards a center of the first terminal-post 30. Exemplarily, each of the six first side surfaces 3012 is angled relative to the Z-axis. In this case, an area of the first top surface 3011 of the first part 301 is less than an area of a surface of the first part 301 away from the second part 302. As such, in the manufacturing process of the first terminal-post 30, the abrasion of a mold can be reduced, and the flow of the material can also be facilitated, thereby improving the manufacturing process yield of the first terminal-post 30. In addition, the flow resistance of the material during stamping of the first terminal-post 30 in a direction from the second part 302 to the first part 301 can be reduced, and the copper layer of the first part 301 is not prone to breakage, thereby avoiding the occurrence of the aluminum layer and the copper layer with aluminum powder in the first part 301. Exemplarily, an angle of each of the first side surfaces 3012 with respect to the thickness direction of the first terminal-post 30 (i.e., Z-axis) ranges from 0.05° to 5°. For example, an angle of each of the first side surfaces 3012 with respect to the Z-axis ranges from 1° to 3°.

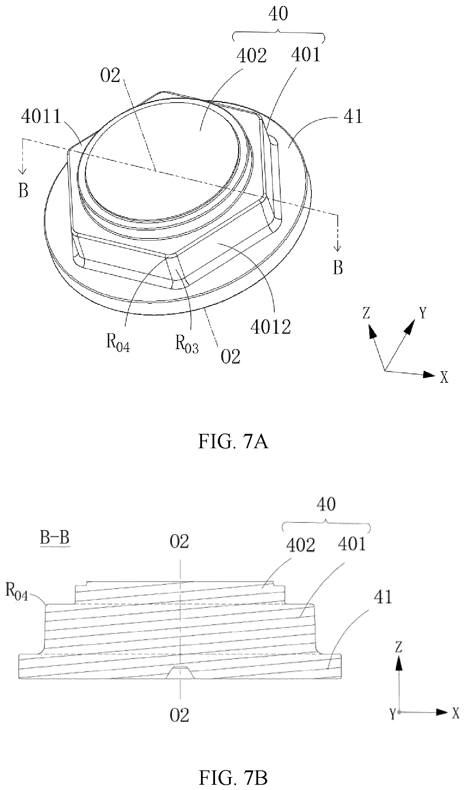

Reference can be made to FIG. 5, FIG. 7A, and FIG. 7B, where FIG. 7A is a schematic structural view of a second terminal-post 40 and a second flange 41 illustrated in FIG. 4, and FIG. 7B is a schematic structural view illustrating part of the second terminal-post 40 and the second flange 41 illustrated in FIG. 7A, taken along a direction. In some embodiments, at least part of the second terminal-post 40 is a hexagonal prism. It may be understood that, part of the second terminal-post 40 may be the hexagonal prism, or all of the second terminal-post 40 may be the hexagonal prism. Exemplarily, the second terminal-post 40 includes a third part 401 and a fourth part 402. In FIG. 7B, the third part 401, the fourth part 402, and the second flange 41 are schematically distinguished by using dashed lines. The fourth part 402 is connected to a surface of one side of the third part 401, and the third part 401 is coaxial with the fourth part 402. The fourth part 402 may be electrically connected to an electrode assembly 500 in the energy-storage apparatus 1000.

The third part 401 is the hexagonal prism. For example, the third part 401 may be a regular hexagonal prism, and the third part 401 has a centrosymmetric structure with respect to a central axis 02-02 of the second terminal-post 40. The fourth part 402 is a cylinder. In a height direction of the second terminal-post 40 (i.e., Z-axis direction), a projection area of the fourth part 402 is less than a projection area of the third part 401. The third part 401 is configured to penetrate through the second through-hole 13 and is connected to the top cover 10 compatibly, so as to achieve high torsional strength. The fourth part 402 is configured to connect to the second pressing ring 52 compatibly. The fourth part 402 is further configured to electrically connect to the electrode assembly 500 in the energy-storage apparatus 1000.

In this embodiment, the second flange 41 is a cylinder. The second flange 41 is configured to connect to a second busbar 6000. The second busbar 6000 may be a positive busbar. The second flange 41 is positioned at one side of the third part 401 away from the fourth part 402 and is connected to the third part 401. The third part 401 may be positioned at the middle of the second flange 41. The second terminal-post 40 and the second flange 41 are an integrally-formed structural member. The second terminal-post 40 and the second flange 41 can be formed through a stamping process.

Exemplarily, the third part 401 of the second terminal-post 40 has a second top surface 4011 facing the fourth part 402 and connected to the fourth part 402. The third part 401 further has six second side surfaces 4012 connected in sequence, and the six second side surfaces 4012 are all connected to the second top surface 4011. The six second side surfaces 4012 are distributed symmetrically around a central axis 02-02 of the second terminal-post 40.

In this embodiment, round chamfering is performed between every two adjacent second side surfaces 4012 of the six second side surfaces 4012, that is, there is a smooth transition between every two adjacent second side surfaces 4012 of the six second side surfaces 4012. As such, in the manufacturing process of the second terminal-post 40, the abrasion of a mold can be reduced, and the flow of the material can also be facilitated, thereby improving the manufacturing process yield of the second terminal-post 40. In addition, the flow resistance of the material during stamping of the second terminal-post 40 can be reduced, and a surface layer of the third part 401 is not prone to breakage.

Exemplarily, round chamfering is performed between two adjacent second side surfaces 4012, and a chamfer *R₀₃* is defined, that is, there is a smooth transition between every two adjacent second side surfaces 4012 of the six second side surfaces 4012. The chamfer *R₀₃* has a radius ranging from 0.5 mm to 5.0 mm. For example, the chamfer *R₀₃* may have a radius ranging from 1.5 mm to 2.5 mm.

In this embodiment, round chamfering is performed at a joint between the second top surface 4011 and each of the second side surfaces 4012, that is, there is a smooth transition between the second top surface 4011 and each of the second side surfaces 4012. As such, the manufacturing process difficulty of the second terminal-post 40 can be reduced, and the flow of the material in the manufacturing process of the second terminal-post 40 can be facilitated. Exemplarily, a chamfer *R₀₄* is defined at a joint between the second top surface 4011 and each of the second side surfaces 4012. The chamfer *R₀₄* has a radius ranging from 0.1 mm to 1 mm. For example, the chamfer *R₀₄* has a radius ranging from 0.25 mm to 0.5 mm.

In this embodiment, in a direction from the second flange 41 to the second terminal-post 40 (i.e., in a direction from the third part 401 to the fourth part 402), each of the second side surfaces 4012 is inclined towards a center of the second terminal-post 40. That is, an area of the second top surface 4011 of the third part 401 is less than an area of a surface of the third part 401 away from the fourth part 402. As such, in the manufacturing process of the second terminal-post 40, the abrasion of a mold can be reduced, and the flow of the material can also be facilitated, thereby improving the manufacturing process yield of the second terminal-post 40. In addition, the flow resistance of the material during stamping of the second terminal-post 40 can be reduced, and the surface layer of the third part 401 is not prone to breakage. Exemplarily, an angle of each of the second side surfaces 4012 with respect to the Z-axis ranges from 0.05° to 5°. For example, the angle of each of the second side surfaces 4012 with respect to the Z-axis ranges from 1° to 3°.

In some other embodiments, the at least part of the first terminal-post 30 and the at least part of the second terminal-post 40 may also be of a polygonal prism structure such as a quadrangular prism or an octagonal prism, or a structure such as a circular prism or a special-shaped prism. It may be understood that, the polygonal prism structure may be a regular polygonal prism structure such as a regular quadrangular prism, a regular octagonal prism, or the like. Alternatively, the polygonal prism structure may not be the regular polygonal prism structure, for example, four corners of the regular quadrangular prism may be cut and removed to form an octagonal prism with four short sides and four long sides.

In some other embodiments, one or more planes may be further formed by cutting the cylindrical first terminal-post 30 in the height direction of the first terminal-post 30 and the cylindrical second terminal-post 40 in the height direction of the second terminal-post 40. As such, when the first terminal-post 30 and the second terminal-post 40 are connected to the top cover 10 compatibly, the first terminal-post 30 and the second terminal-post 40 are not easily rotated relative to the top cover 10, thereby improving the torsional strength of the first terminal-post 30 and the second terminal-post 40. For example, centrosymmetric four planes are formed by cutting the cylindrical first terminal-post 30 in the height direction of the first terminal-post 30 and the cylindrical second terminal-post 40 in the height direction of the second terminal-post 40. In this way, the first terminal-post 30 and the second terminal-post 40 can have a better anti-twist effect and fewer processing process.

In this embodiment, the first pressing ring 51 is sleeved on the first terminal-post 30 and is fixedly connected to the first terminal-post 30 and the lower plastic member 20. Exemplarily, an inner side wall of the first pressing ring 51 is circular and is connected to the second part 302 of the first terminal-post 30 compatibly. An outer periphery of the first pressing ring 51 is substantially pentagonal, and one side of the first pressing ring 51 is a short side. It may be understood that, the first pressing ring 51 can be obtained by cutting and removing one corner of a rectangular pressing ring. As such, when the first pressing ring 51 is connected to the lower plastic member 20, the first pressing ring 51 is not easily rotated relative to the lower plastic member 20 and the top cover 10, and the first terminal-post 30 is also not easily rotated relative to the top cover 10, which is conducive to improving the torsional strength of the first terminal-post 30.

Exemplarily, the second pressing ring 52 is sleeved on the second terminal-post 40 and is fixedly connected to the second terminal-post 40 and the lower plastic member 20. Exemplarily, an inner side wall of the second pressing ring 52 is circular and is connected to the fourth part 402 of the second terminal-post 40 compatibly. An outer side wall of the second pressing ring 52 is substantially pentagonal, and one side of the second pressing ring 52 is a short side. It may be understood that, the second pressing ring 52 can be obtained by cutting and removing one corner of a rectangular pressing ring. As such, when the second pressing ring 52 is connected to the lower plastic member 20, the second pressing ring 52 is not easily rotated relative to the lower plastic member 20 and the top cover 10, and thus the second terminal-post 40 is also not easily rotated relative to the top cover 10, which is conducive to improving the torsional strength of the second terminal-post 40.

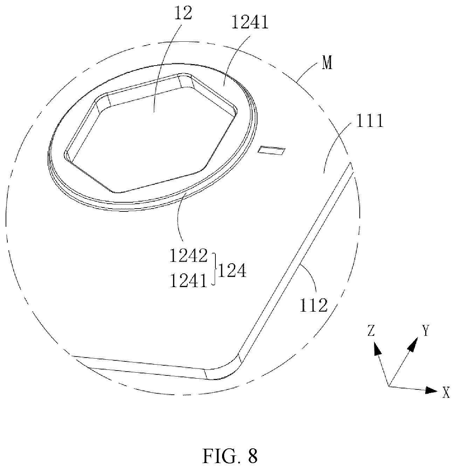

Reference can be made to FIG. 4 and FIG. 8, where FIG. 8 is a partial enlarged view of the end cover assembly 100 at Circle M in FIG. 4. In this embodiment, the top cover 10 further includes a first boss 124 and a second boss 134. The first boss 124 is positioned at one of two opposite ends (arranged in an X-axis direction) of the top cover body 11 and is configured to connect to a first upper plastic member 61 compatibly, and the second boss 134 is positioned at the other one of the two opposite ends of the top cover body 11 and is configured to connect to a second upper plastic member 62 compatibly. The first boss 124 and the second boss 134 each protrude from the front face 111 of the top cover body 11. The first through-hole 12 extends through the first boss 124. The second through-hole 13 extends through the second boss 134.

Exemplarily, the first boss 124 is annular, and an inner periphery of the first boss 124 is hexagonal and is connected to the first terminal-post 30 compatibly. An outer periphery of the first boss 124 is substantially circular. The first boss 124 has a first-boss top surface 1241 positioned facing away from the front face 111 and a first peripheral side surface 1242 connected to the first-boss top surface 1241, and the first peripheral side surface 1242 is further connected to the front face 111 of the top cover body 11. The first peripheral side surface 1242 is an inclined surface, and in a direction from the back face 112 to the front face 111, the first peripheral side surface 1242 is inclined towards the first through-hole 12 with respect to a thickness direction of the top cover 10 (i.e., Z-axis direction). As such, in the process of forming the first boss 124 on the top cover 10 by upsetting, the flow of the material to the first through-hole 12 can be easily realized, thereby reducing the abrasion of a stamping mold caused by the top cover 10, improving the product yield and the service life of the mold, and reducing the production of metal wire.

Exemplarily, an angle of the first peripheral side surface 1242 with respect to the Z-axis direction ranges from 5° to 60°. The angle of the first peripheral side surface 1242 with respect to the Z-axis direction may range from 10° to 30°, such as 10°, 20°, 30°, etc.

Exemplarily, the second boss 134 is annular, and an inner periphery of the second boss 134 is hexagonal and is connected to the second terminal-post 40 compatibly. An outer periphery of the second boss 134 is substantially circular. The second boss 134 has a second-boss top surface 1341 positioned facing away from the front face 111 and a second peripheral side surface 1342 connected to the second-boss top surface 1341, and the second peripheral side surface 1342 is further connected to the front face 111 of the top cover body 11. The second peripheral side surface 1342 is an inclined surface, and in a direction from the back face 112 to the front face 111, the second peripheral side surface 1342 is inclined towards the second through-hole 13 with respect to a thickness direction of the top cover 10 (i.e., Z-axis direction). As such, in the process of forming the second boss 134 on the top cover 10 by upsetting, the flow of the material to the second through-hole 13 can be easily realized, thereby reducing the abrasion of a stamping mold caused by the top cover 10, improving the product yield and the service life of the mold, and reducing the production of metal wire.

Exemplarily, an angle of the second peripheral side surface 1342 with respect to the Z-axis direction ranges from 5° to 60°. The angle of the second peripheral side surface 1342 with respect to the Z-axis direction may range from 10° to 30°, such as 10°, 20°, 30°, etc.

In some embodiments, the top cover 10 may further include an explosion-proof valve protection sheet 16. The explosion-proof valve protection sheet 16 is positioned facing towards the explosion-proof valve 14 and is configured to cover the explosion-proof valve 14.

As illustrated in FIG. 4 and FIG. 5, in this embodiment, the lower plastic member 20 includes a lower-plastic-member body 21. The lower-plastic-member body 21 is substantially a rectangular thin plate, and in a thickness direction of the lower-plastic-member body 21 (Z-axis direction), the lower-plastic-member body 21 has a first surface 211 and a second surface 212 opposite to the first surface 211.

Exemplarily, the lower plastic member 20 defines a first terminal-post through-hole 22, a first accommodating recess 221, a second terminal-post through-hole 23, and a second accommodating recess 231. The first accommodating recess 221 is recessed from the second surface 212 towards the first surface 211 and is provided with a first snapped protrusion 221A on the first surface 211. The first terminal-post through-hole 22 extends through a bottom wall of the first accommodating recess 221 and the first surface 211, that is, the first terminal-post through-hole 22 extends through the lower-plastic-member body 21 and the first snapped protrusion 221A. The first terminal-post through-hole 22 may refer to a terminal-post through-hole.

Exemplarily, the first accommodating recess 221 and the first terminal-post through-hole 22 are coaxial and positioned close to one end of the lower-plastic-member body 21. The first terminal-post through-hole 22 is configured to allow the first terminal-post 30 to pass through. The first terminal-post through-hole 22 is hexagonal and is configured to connect to the first terminal-post 30 compatibly. The first accommodating recess 221 is configured to accommodate the first pressing ring 51.

Exemplarily, the second accommodating recess 231 is recessed from the second surface 212 towards the first surface 211 and is provided with a second snapped protrusion 231A on the first surface 211. The second terminal-post through-hole 23 extends through the first surface 211 and the second surface 212, and the second terminal-post through-hole 23 extends through a bottom wall of the second accommodating recess 231, that is, the second terminal-post through-hole 23 extends through the lower-plastic-member body 21 and the second snapped protrusion 231A.

Exemplarily, the second accommodating recess 231 and the second terminal-post through-hole 23 are coaxial and positioned close to the other end of the lower-plastic-member body 21. The second terminal-post through-hole 23 is configured to allow the second terminal-post 40 to pass through. The second terminal-post through-hole 23 is hexagonal and is configured to connect to the second terminal-post 40 compatibly. The second accommodating recess 231 is configured to accommodate the second pressing ring 52.

In this embodiment, the end cover assembly 100 further includes a first upper plastic member 61 and a second upper plastic member 62. The first upper plastic member 61 and the second upper plastic member 62 each are an annular body. The first upper plastic member 61 is configured to fixedly connect to the top cover 10 and is sleeved on the first part 301 of the first terminal-post 30 and the first flange 31, that is, the first terminal-post 30 and the first flange 31 are connected to and are insulated from the top cover 10 through the first upper plastic member 61. The second upper plastic member 62 is configured to fixedly connect to the top cover 10 and is sleeved on the third part 401 of the second terminal-post 40 and the second flange 41, that is, the second terminal-post 40 and the second flange 41 are connected to and are insulated from the top cover 10 through the second upper plastic member 62.

Exemplarily, the first upper plastic member 61 includes a first body portion 611, a first inner-ring portion 612, and a first outer-ring portion 613. An outer periphery of the first body portion 611 is circular, the first body portion 611 defines a through-hole, and the first inner-ring portion 612 is disposed around the through-hole of the first body portion 611 and protrudes from a surface of one side of the first body portion 611. The through-hole of the first body portion 611 and the first inner-ring portion 612 each are in the shape of a regular hexagon. The first outer-ring portion 613 surrounds the first body portion 611 and is connected to the first body portion 611. The first outer-ring portion 613 partially protrudes from surfaces of two sides of the first body portion 611, and cooperates with the first body portion 611 and the first inner-ring portion 612 to define a first limiting groove 614.

Exemplarily, the through-hole of the first body portion 611 and the first inner-ring portion 612 each are in the shape of a regular hexagon and are configured to connect to the first terminal-post 30 compatibly. In embodiments of the present disclosure, a shape of the through-hole of the first body portion 611 and a shape of the first inner-ring portion 612 can be changed correspondingly with a shape of the first terminal-post 30, and the through-hole of the first body portion 611 and the first inner-ring portion 612 may be in the shape of a polygonal ring, a circular ring, or a special ring, which is not limited in the present disclosure.

In this embodiment, the second upper plastic member 62 includes a second body portion 621, a second inner-ring portion 622, and a second outer-ring portion 623. An outer periphery of the second body portion 621 is circular, the second body portion 621 defines a through-hole, and the second inner-ring portion 622 is disposed around the through-hole of the second body portion 621 and protrudes from a surface of one side of the second body portion 621. The through-hole of the second body portion 621 and the second inner-ring portion 622 each are in the shape of a regular hexagon. The second outer-ring portion 623 surrounds the second body portion 621 and is connected to the second body portion 621. The second outer-ring portion 623 partially protrudes from surfaces of two sides of the second body portion 621, and cooperates with the second body portion 621 and the second inner-ring portion 622 to define a second limiting groove 624.

Exemplarily, the through-hole of the second body portion 621 and the second inner-ring portion 622 each are in the shape of a regular hexagon and are configured to connect to the second terminal-post 40 compatibly. In embodiments of the present disclosure, a shape of the through-hole of the second body portion 621 and a shape of the second inner-ring portion 622 can be changed correspondingly with a shape of the second terminal-post 40, and the through-hole of the second body portion 621 and the second inner-ring portion 622 may be in the shape of a polygonal ring, a circular ring, or a special ring, which is not limited in the present disclosure.

In this embodiment, the end cover assembly 100 further includes a first sealing member 71 and a second sealing member 72. The first sealing member 71 and the second sealing member 72 each are a hexagonal annular elastic member, which can be made of rubber material. The first sealing member 71 is configured to connect to the first terminal-post 30 compatibly, and the second sealing member 72 is configured to connect to the second terminal-post 40 compatibly.

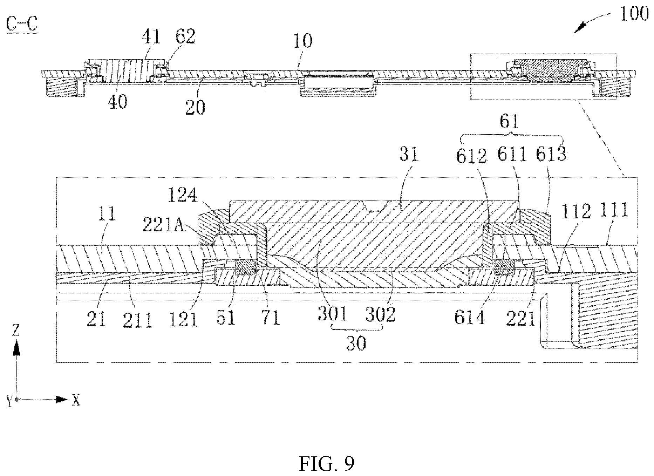

Reference can be made to FIG. 4, FIG. 5, and FIG. 9, where FIG. 9 is a schematic structural view illustrating part of an end cover assembly 100 illustrated in FIG. 2, taken along a direction.

In this embodiment, the lower plastic member 20 is stacked with and connected to the top cover 10. A length of the lower plastic member 20 is equivalent to a length of the top cover 10, and a width of the lower plastic member 20 is equivalent to a width of the top cover 10, where a certain tolerance range is allowed. The lower plastic member 20 is positioned at one side of the back face 112 of the top cover body 11 facing away from the front face 111 of the top cover body 11, and is stacked with and connected to the top cover 10. Exemplarily, the first surface 211 of the lower plastic member 20 is positioned facing towards and attached to the back face 112 of the top cover body 11. In the thickness direction of the top cover 10 (Z-axis direction), the first terminal-post through-hole 22 of the lower plastic member 20 is positioned facing towards and in communication with the first through-hole 12 of the top cover 10, and the second terminal-post through-hole 23 of the lower plastic member 20 is positioned facing towards and in communication with the second through-hole 13 of the top cover 10.

Exemplarily, the first snapped protrusion 221A of the lower plastic member 20 is inserted into a first mounting recess 121, and the first snapped protrusion 221A can be snapped into the first mounting recess 121 to achieve mutual positioning. The first terminal-post 30 penetrates through the first terminal-post through-hole 22 and the first through-hole 12. Specifically, the first part 301 penetrates through the first through-hole 12 and the first terminal-post through-hole 22. The first pressing ring 51 is sleeved on the second part 302 of the first terminal-post 30 and is fixedly connected to the second part 302. The first pressing ring 51 is accommodated in the first accommodating recess 221 of the lower plastic member 20 and is fixedly connected to a wall of the first accommodating recess 221. In FIG. 9, the first part 301, the second part 302, and the first flange 31 are schematically distinguished by using dashed lines. Compared with a solution in which the first terminal-post 30 is cylindrical, in the present disclosure, the first terminal-post 30 is set to be hexagonal prism-shaped (or polygonal prism-shaped), and the shapes of the first through-hole 12 and the first terminal-post through-hole 22 are also set to be a shape corresponding to the first terminal-post 30, so that when the first terminal-post 30 is connected to the top cover 10 compatibly, the first terminal-post 30 is not easily rotated relative to the top cover 10. In this way, the torsional strength of the first terminal-post 30 can be improved, which is conducive to preventing a part of the lower plastic member 20 positioned between the first terminal-post 30 and the top cover body 11 from being cut.

In this embodiment, the second snapped protrusion 231A of the lower plastic member 20 is inserted into a second mounting recess 131, and the second snapped protrusion 231A can be snapped into the second mounting recess 131 to achieve mutual positioning. The second terminal-post 40 penetrates through the second terminal-post through-hole 23 and the second through-hole 13. Specifically, the third part 401 penetrates through the second through-hole 13 and the second terminal-post through-hole 23. The second pressing ring 52 is sleeved on the fourth part 402 of the second terminal-post 40 and is fixedly connected to the fourth part 402. The second pressing ring 52 is accommodated in the second accommodating recess 231 of the lower plastic member 20 and is fixedly connected to a wall of the second accommodating recess 231. Compared with a solution in which the second terminal-post 40 is cylindrical, in the present disclosure, the second terminal-post 40 is set to be a hexagon (or another polygon), and the shapes of the second through-hole 13 and the second terminal-post through-hole 23 are also set to be a shape corresponding to the second terminal-post 40, so that when the second terminal-post 40 is connected to the top cover 10 compatibly, the second terminal-post 40 is not easily rotated relative to the top cover 10. In this way, the torsional strength of the second terminal-post 40 can be improved, which is conducive to preventing a part of the lower plastic member 20 positioned between the second terminal-post 40 and the top cover body 11 from being cut.

In this embodiment, the first upper plastic member 61 is sleeved on a periphery of the first terminal-post 30 and a periphery of the first pressing ring 51, and is connected to the front face 111 of the top cover body 11. Exemplarily, the first inner-ring portion 612 of the first upper plastic member 61 surrounds the first terminal-post 30 and is clamped between the first through-hole 12 and the first terminal-post 30. The first outer-ring portion 613 of the first upper plastic member 61 is sleeved on the first flange 31, and the first flange 31 is connected to both the first outer-ring portion 613 and the first body portion 611.

In this embodiment, the first boss 124 of the top cover body 11 is positioned in the first limiting groove 614 of the first upper plastic member 61, and the first boss 124 is connected to each of the first outer-ring portion 613, the first body portion 611, and the first inner-ring portion 612. In FIG. 9, the top cover body 11 and the first boss 124 are schematically distinguished by using dashed lines. In embodiment of the present disclosure, with the arrangement of the first boss 124 at an edge of the first through-hole 12, a height of a hole wall of the first through-hole 12 is increased, and thus a connection area between the first terminal-post 30 and the top cover 10 is increased, which is conducive to preventing twisting of the first terminal-post 30 relative to the top cover 10, thereby reducing cutting of the lower plastic member 20.

In this embodiment, the second upper plastic member 62 is sleeved on a periphery of the second terminal-post 40 and a periphery of the second pressing ring 52, and is connected to the front face 111 of the top cover body 11. Exemplarily, the second inner-ring portion 622 of the second upper plastic member 62 surrounds the second terminal-post 40 and is clamped between the second through-hole 13 and the second terminal-post 40. The second outer-ring portion 623 of the second upper plastic member 62 is sleeved on the second flange 41, and the second flange 31 is connected to both the second outer-ring portion 623 and the second body portion 621. In FIG. 9, the second body portion 621, the second inner-ring portion 622, and the second outer-ring portion 623 are schematically distinguished by using dashed lines.

In this embodiment, the second boss 134 of the top cover body 11 is positioned in the second limiting groove 624 of the second upper plastic member 62, and the second boss 134 is connected to each of the second outer-ring portion 623, the second body portion 621, and the second inner-ring portion 622. In embodiment of the present disclosure, with the arrangement of the second boss 134 at an edge of the second through-hole 13, a height of a hole wall of the second through-hole 13 is increased, and thus a connection area between the second terminal-post 40 and the top cover 10 is increased, which is conducive to preventing twisting of the second terminal-post 40 relative to the top cover 10, thereby reducing cutting of the lower plastic member 20.

It may be understood that, the first upper plastic member 61 and the second upper plastic member 62 are formed by in-mold injection molding after the lower plastic member 20, the first terminal-post 30, and the second terminal-post 40 are assembled with the top cover 10. That is, in the forming process, the above position and connection relationships occur between the first upper plastic member 61 and the first terminal-post 30, between the second upper plastic member 62 and the second terminal-post 40, between each of the first upper plastic member 61 and the second upper plastic member 62 and the top cover 10, and between each of the first upper plastic member 61 and the second upper plastic member 62 and the lower plastic member 20. For example, the first inner-ring portion 612 of the first upper plastic member 61 is directly formed between the first through-hole 12 and the first terminal-post 30 and is clamped between the first through-hole 12 and the first terminal-post 30, and the first body portion 611 of the first upper plastic member 61 is directly formed between the first flange 31 and the first boss 124 and is clamped between the first flange 31 and the first boss 124. The second inner-ring portion 622 of the second upper plastic member 62 is directly formed between the second through-hole 13 and the second terminal-post 40 and is clamped between the second through-hole 13 and the second terminal-post 40, and the second body portion 621 of the second upper plastic member 62 is directly formed between the second flange 41 and the second boss 134 and is clamped between the second flange 41 and the second boss 134.

Exemplarily, the first sealing member 71 is positioned in the first terminal-post through-hole 22, and the first sealing member 71 is sleeved on the first inner-ring portion 612 of the first upper plastic member 61, that is, the first sealing member 71 is sleeved on the first terminal-post 30. The first sealing member 71 is clamped between the top cover body 11 and the first pressing ring 51. Specifically, in the thickness direction of the end cover assembly 100, at least part of the first sealing member 71 is clamped between a surface of the first pressing ring 51 facing the first flange 31 and the back face 112 of the top cover body 11. It may be understood that, the first sealing member 71 is compressed between the first pressing ring 51, the top cover body 11, and the first upper plastic member 61, and is configured to seal the first terminal-post through-hole 22.

Exemplarily, the second sealing member 72 is positioned in the second terminal-post through-hole 23, and the second sealing member 72 is sleeved on the second inner-ring portion 622 of the second upper plastic member 62, that is, the second sealing member 72 is sleeved on the second terminal-post 40. The second sealing member 72 is clamped between the top cover body 11 and the second pressing ring 52. Specifically, in the thickness direction of the end cover assembly 100, at least part of the second sealing member 72 is clamped between a surface of the second pressing ring 52 facing the second flange 41 and the back face 112 of the top cover body 11. It may be understood that, the second sealing member 72 is compressed between the second pressing ring 52, the top cover body 11, and the second upper plastic member 62, and is configured to seal the second terminal-post through-hole 23.

The foregoing mainly describes structures of components (including the top cover 10, the lower plastic member 20, the first terminal-post 30, the second terminal-post 40, and the like) of the energy-storage apparatus 1000 and connection manners of the components of the energy-storage apparatus 1000. The first terminal-post 30 and the first flange 31 can be formed into an integrally-formed structural member through a stamping process, and the first terminal-post 30 (i.e., a composite terminal-post) includes a first member 33 and a second member 34 that are made of different materials. A forming process of the first terminal-post 30 and the first flange 31 (i.e., a forming process of a terminal-post assembly) will be described below with reference to the related accompanying drawings.

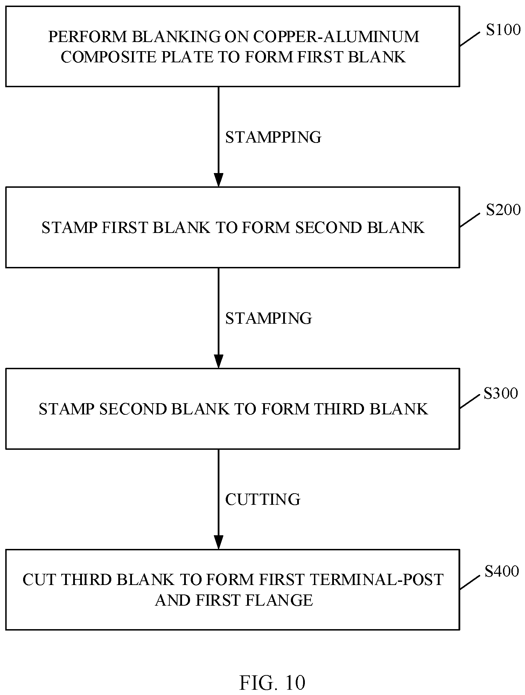

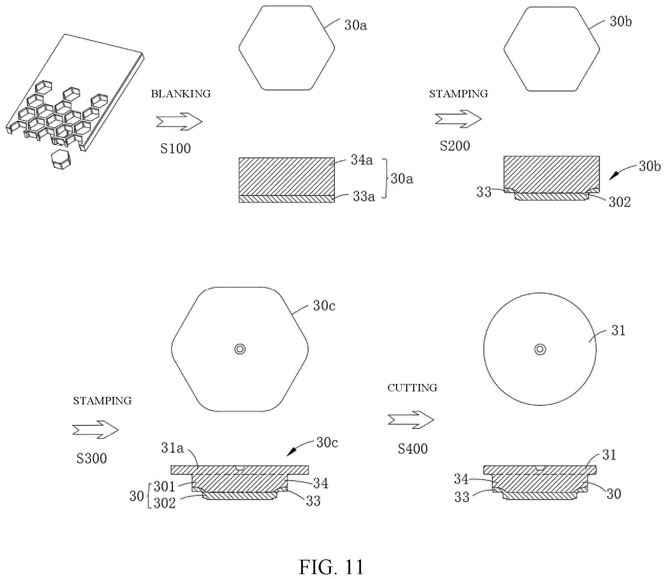

Reference can be made to FIG. 10 and FIG. 11, where FIG. 10 is a schematic view illustrating production operations of the first terminal-post 30 and the first flange 31 illustrated in FIG. 6A in some embodiments, and FIG. 11 is a view illustrating a production process of the first terminal-post 30 and the first flange 31 illustrated in FIG. 6A in some embodiments.

At S100, blanking is performed on a copper-aluminum composite plate to form a first blank 30a.

In embodiments of the disclosure, the first blank 30a includes a copper layer 33a and an aluminum layer 34a that are arranged in a thickness direction of the blank and connected to each other, and a thickness of the copper layer 33a is less than a thickness of the aluminum layer 34a. The first terminal-post 30 uses less copper and has low cost, and the first terminal-post 30 has a small weight. The first blank 30a has a shape of a polygonal prism. Exemplarily, the first blank 30a has a shape of a regular hexagonal prism. Compared with a solution in which the first blank 30a is cylindrical, in the present disclosure, the first blank 30a is the regular hexagonal prism, and thus blanking positions on the copper-aluminum composite plate are closer to each other, so that the copper-aluminum composite plate can have more blanking positions, and the material utilization of the copper-aluminum composite plate can be improved.

At S200, after operations at S100, the first blank 30a is stamped to form the first member 33 of the first terminal-post 30 (or the second part 302 of the first terminal-post 30) on the first blank 30a. That is, a second blank 30b is formed. The first member 33 of the first terminal-post 30 (or the second part 302 of the first terminal-post 30) has a simple production process and a high manufacturing process yield. In FIG. 11, the second part 302 is schematically distinguished by using dashed lines.

In embodiments of the present disclosure, the copper layer of the first blank 30a collapses and flows around under the extrusion of an external force, and a thickness of the first blank 30a is reduced, so that a thickness of the second blank 30b formed after operations at S200 is less than the thickness of the first blank 30a, and a thickness of a copper layer of the second blank 30b is greater than or equal to the thickness of the copper layer of the first blank 30a. As such, the copper layer of the first terminal-post 30 may extend from the second part 302 to the first part 301, so that an area of the copper layer of the first terminal-post 30 is large, and the conductivity of the first terminal-post 30 is good. In addition, since the heating speed of copper is less than the heating speed of aluminum, by increasing an area of the copper material of the first terminal-post 30 and reducing an area of the aluminum material of the first terminal-post 30, the first terminal-post 30 is not prone to heat generation, which is conducive to improving the reliability of the energy-storage apparatus 1000.

Exemplarily, the second part 302 is cylindrical. An outer surface of the second part 302 is made of copper. As such, when the second part 302 is connected to the electrode assembly 500 in the energy-storage apparatus 1000 through a connection sheet, since both the second part 302 and the connection sheet are made of copper, the reliability of laser welding between the second part 302 and the connection sheet is good, and the second part 302 is not easy to fall off the connection sheet. Therefore, the conductivity between the first terminal-post 30 and the electrode assembly 500 in the energy-storage apparatus 1000 can be ensured, which is conducive to improving the reliability of the energy-storage apparatus 1000.

At S300, after operations at S200, the second blank 30b is stamped to form on the second blank 30b the second member 34 of the first terminal-post 30 (or the first part 301 of the first terminal-post 30) and a third part 31a connected to the second member 34. That is, a third blank 30c is formed. The second member 34 of the first terminal-post 30 (or the first part 301 of the first terminal-post 30) has a simple production process and a high manufacturing process yield. In FIG. 11, the first part 301, the second part 302, and the third part 31a are schematically distinguished by using dashed lines.

In embodiments of the present disclosure, after the second member 34 is formed, a large pressure is applied to squeeze an aluminum layer of the second blank 30b, so that the aluminum layer collapses and flows around, the thickness of the second blank 30b is reduced, and thus the second member 34 and the third part 31a are formed. A pressure for squeezing the second blank 30b ranges from 30 tons to 50 tons, such as 40 tons.

Exemplarily, the first terminal-post 30 includes a first member 33 and a second member 34 stacked with and connected to the first member 33. Exemplarily, the first member 33 and the second member 34 are arranged in a thickness direction of the first terminal-post 30 (Z-axis direction). A material of the first member 33 is different from a material of the second member 34, and a connection interface between the first member 33 and the second member 34 is a curved surface, so that heat can be uniformly generated at the connection interface between the first member 33 and the second member 34 during operation of the first terminal-post 30, thereby avoiding the problem of concentrated heat generation at the connection interface caused by different materials of the first member 33 and the second member 34. In addition, a contact area between the first member 33 and the second member 34 is relatively large, a contact area between the copper layer and the aluminum layer is relatively large, and the conductivity between the copper layer and the aluminum layer is relatively good, so that the reliability of the energy-storage apparatus 1000 is relatively good.

At S400, after operations at S300, the third blank 30c is cut to form the first terminal-post 30 and the first flange 31. In FIG. 11, the first part 301, the second part 302, and the first flange 31 are schematically distinguished by using dashed lines.

Exemplarily, after the first part 301 and the third part 31a connected to the first part 301 are formed on the second blank 30b, the third part 31a is cut to form a cylindrical shape, i.e., form the first flange 31. It may be understood that, the first terminal-post 30 and the first flange 31 are formed through at least two stamping processes. Exemplarily, the first terminal-post 30 and the first flange 31 are formed through two stamping processes. A forming process of the first flange 31 follows a forming process of the first terminal-post 30. Therefore, the first flange 31 has a simple forming process, and the first terminal-post 30 and the first flange 31 have a high forming process yield.

A material of the first flange 31 is the same as the material of the second member 34, and both the first flange 31 and the second member 34 are made of aluminum. As such, when the first flange 31 is connected to a first busbar, since both the first flange 31 and the first busbar are made of aluminum, the reliability of laser welding between the first flange 31 and the first busbar is good, and the first flange 31 is not easy to fall off the first busbar. Therefore, the conductivity between the first flange 31 and the first busbar 5000 can be ensured, which is conducive to improving the reliability of the energy-storage apparatus 1000.

In some embodiments, after operations at S400, the first terminal-post 30 and the first flange 31 may be further cleaned to remove dust, impurities, and metal chips on surfaces of the first terminal-post 30 and the first flange 31, so that the conductivity between the first terminal-post 30 and the first flange 31 will not be affected by the dust, impurities, and metal chips, and thus the reliability of the energy-storage apparatus 1000 will not be affected.

It may be understood that, the production method of the first terminal-post 30 and the first flange 31 provided in the present disclosure may also be applicable to some structures similar to the first terminal-post 30 and the first flange 31, which is not limited in the present disclosure.

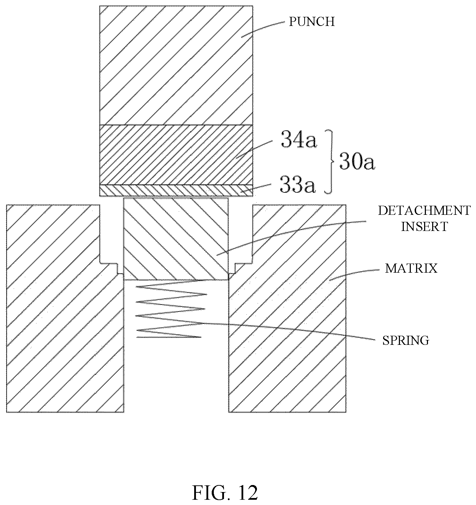

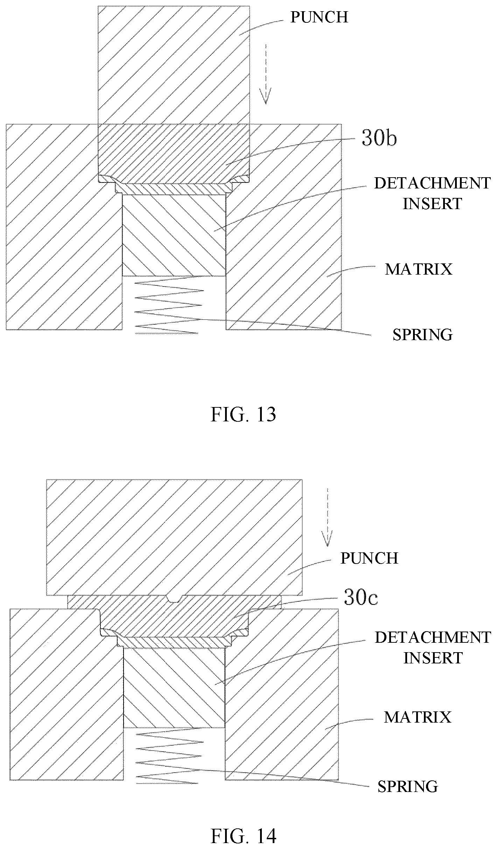

Reference can be made to FIG. 11, FIG. 12, and FIG. 13, where FIG. 12 is a schematic view of a state in a manufacturing process of the first terminal-post 30 and the first flange 31 illustrated in FIG. 11, and FIG. 13 is a schematic view of another state in a manufacturing process of the first terminal-post 30 and the first flange 31 illustrated in FIG. 11. Exemplarily, FIG. 12 illustrates a state in which the first blank 30a is not subjected to cold heading - mold closing, and FIG. 13 illustrates a state in which the second blank 30b is formed after the first blank 30a is subjected to cold heading - mold closing.

In embodiment of the present disclosure, the first terminal-post 30 and the first flange 31 can be formed on a stamping device. Exemplarily, the stamping device includes a punch, a matrix, a detachment insert, and a spring. The matrix defines a recess of a preset shape. By applying a pressure to a blank, a material of the blank can flow to fill the recess of the matrix, and thus the blank can be stamped into a preset shape under the mutual cooperation of the punch and the matrix. The detachment insert and the spring can allow the stamped blank to detach from the matrix.

In embodiments of the present disclosure, under the action of an external force, the copper layer 33a of the first blank 30a collapses and flows around under the cooperation of the punch and the matrix, so as to form the second blank 30b. Exemplarily, the thickness of the second blank 30b is less than the thickness of the first blank 30a. A maximum thickness of the copper layer of the first blank 30a is less than or equal to a maximum thickness of the copper layer of the second blank 30b. In other words, a coverage area of the copper layer of the second blank 30b is greater than or equal to a coverage area of the copper layer of the first blank 30a. As such, the copper layer of the first terminal-post 30 may extend from the second part 302 to the first part 301, so that an area of the copper layer of the first terminal-post 30 is large, and the conductivity of the first terminal-post 30 is good. In addition, since the heating speed of copper is less than the heating speed of aluminum, by increasing an area of the copper of the first terminal-post 30 and reducing an area of the aluminum of the first terminal-post 30, the first terminal-post 30 is not prone to heat generation, which is conducive to improving the reliability of the energy-storage apparatus 1000.

Reference can be made to FIG. 11, FIG. 13, and FIG. 14, where FIG. 14 is a schematic view of another state in a manufacturing process of the first terminal-post 30 and the first flange 31 illustrated in FIG. 11. Exemplarily, FIG. 14 illustrates a state in which the third blank 30c is formed after the second blank 30b is subjected to cold heading - mold closing.

Exemplarily, after the second blank 30b is formed, a large pressure is applied to squeeze an aluminum layer of the second blank 30b, so that the aluminum layer of the second blank 30b collapses and flows around under the cooperation of the punch and the matrix, and thus the third blank 30c is formed. A pressure for squeezing the second blank 30b ranges from 30 tons to 50 tons, such as 40 tons. Exemplarily, a thickness of the third blank 30c is less than the thickness of the second blank 30b.

Exemplarily, the third blank 30c includes a first member 33 and a second member 34 stacked with and connected to the first member 33. A material of the first member 33 is different from a material of the second member 34, and a connection interface between the first member 33 and the second member 34 is a curved surface, so that heat can be uniformly generated at the connection interface between the first member 33 and the second member 34 during operation of the first terminal-post 30, thereby avoiding the problem of concentrated heat generation at the connection interface caused by different materials of the first member 33 and the second member 34. In addition, a contact area between the first member 33 and the second member 34 is relatively large, a contact area between the copper layer and the aluminum layer is relatively large, and the conductivity between the copper layer and the aluminum layer is relatively good, so that the reliability of the energy-storage apparatus 1000 is relatively good.

The embodiments of the present disclosure are introduced in detail above, and specific examples are used herein to illustrate the principles and embodiments of the present disclosure. The description of the embodiments is only used to facilitate understanding of the method and core ideas of the present disclosure. Additionally, for those of ordinary skill in the art, according to ideas of the present disclosure, there may be modifications in specific embodiments and application scope. In conclusion, the content of this specification should not be construed as limiting the disclosure.

## Claims

1. A terminal-post assembly, comprising a first terminal-post (30) and a first flange (31) connected to one end of the first terminal-post (30), wherein
the first terminal-post (30) comprises a first member (33) and a second member (34) stacked with and connected to the first member (33), and the second member (34) is connected to the first flange (31); and a material of the first member (33) is different from a material of the second member (34), and a connection interface between the first member (33) and the second member (34) is a curved surface; and
the first terminal-post (30) is configured to connect to an electrode assembly (500) in an energy-storage apparatus (1000), and the first flange (31) is configured to connect to a first busbar (5000).

2. The terminal-post assembly of claim 1, wherein the material of the second member (34) is the same as a material of the first flange (31); and the material of the first member (33) comprises copper, and the material of the second member (34) comprises aluminum.

3. The terminal-post assembly of claim 1, wherein the first terminal-post (30) comprises a first part (301) and a second part (302), and the second part (302) is connected to a surface of one side of the first part (301); and
the first part (301) comprises part of the first member (33) and at least part of the second member (34), and the second part (302) at least comprises the other part of the first member (33).

4. The terminal-post assembly of claim 3, wherein the first part (301) is polygonal prism-shaped.

5. The terminal-post assembly of claim 4, wherein the first part (301) has a first top surface (3011) facing the second part (302) and connected to the second part (302), the first part (301) further has six first side surfaces (3012) connected in sequence, the six first side surfaces (3012) are all connected to the first top surface (3011), and the six first side surfaces (3012) are distributed symmetrically around a central axis of the first terminal-post (30); and
the first top surface (3011) is a surface of the first member (33) away from the first flange (31), one part of each of the six first side surfaces (3012) is located on the first member (33), and the other part of each of the six first side surfaces (3012) is located on the second member (34).

6. The terminal-post assembly of claim 5, wherein in a thickness direction of the first terminal-post (30), a length of the first member (33) at a joint between two adjacent first side surfaces (3012) is greater than a length of the first member (33) at each of the six first side surfaces (3012).

7. The terminal-post assembly of claim 5, wherein a chamfer *R₀₁* is defined at a joint between two adjacent first side surfaces (3012), and the chamfer *R₀₁* has a radius ranging from 0.5 mm to 5.0 mm.

8. The terminal-post assembly of claim 5, wherein a chamfer *R₀₂* is defined at a joint between the first top surface (3011) and each of the six first side surfaces (3012), and the chamfer *R₀₂* has a radius ranging from 0.1 mm to 1 mm.

9. The terminal-post assembly of claim 5, wherein in a direction from the first part (301) to the second part (302), each of the six first side surfaces (3012) is inclined towards a center of the first terminal-post (30).

10. The terminal-post assembly of claim 9, wherein an angle of each of the six first side surfaces (3012) with respect to a thickness direction of the first terminal-post (30) ranges from 0.05° to 5°.

11. The terminal-post assembly of claim 1, wherein the first terminal-post (30) and the first flange (31) are an integrally-formed structural member.

12. An energy-storage apparatus (1000), comprising a housing (400), an end cover assembly (100), and an electrode assembly (500), wherein the end cover assembly (100) is mounted on the housing (400) and is configured to seal an opening of the housing (400);
the end cover assembly (100) comprises a top cover (10), a lower plastic member (20), and the terminal-post assembly of any of claims 1 to 11;
the top cover (10) defines a first through-hole (12), the lower plastic member (20) defines a first terminal-post through-hole (22), the lower plastic member (20) is positioned at one side of the top cover (10) and is stacked with and connected to the top cover (10), the first terminal-post through-hole (22) is positioned aligned with the first through-hole (12), and the first terminal-post (30) penetrates through the first through-hole (12) and the first terminal-post through-hole (22); and
a shape of the first through-hole (12) and a shape of the first terminal-post through-hole (22) each match a shape of the first part (301) of the first terminal-post (30).

13. The energy-storage apparatus (1000) of claim 12, wherein the top cover (10) comprises a top cover body (11), in a thickness direction of the top cover body (11), the top cover body (11) has a front face (111) and a back face (112) opposite to the front face (111), and the first through-hole (12) extends through the front face (111) and the back face (112);
the top cover (10) further comprises a first boss (124), the first boss (124) protrudes from the front face (111), and the first through-hole (12) further extends through the first boss (124); and
the first boss (124) has a first peripheral side surface (1242), and in a direction from the back face (112) to the front face (111), the first peripheral side surface (1242) is inclined towards the first through-hole (12) with respect to a thickness direction of the top cover (10).

14. An electricity-consumption device, comprising the energy-storage apparatus (1000) of claim 12 or 13.

15. A production method of a first terminal-post in a terminal-post assembly, wherein the terminal-post assembly comprises the first terminal-post, the first terminal-post comprises a first member and a second member stacked with and connected to the first member, a material of the first member is different from a material of the second member, and a connection interface of the first member and the second member is a curved surface; and
the production method comprising:
performing (S100) blanking on a copper-aluminum composite plate to form a first blank;
stamping (S200) the first blank to form a second blank, wherein the second blank comprises the first member; and
tamping (S300) the second blank to form a third blank, wherein the third blank comprises the first member and the second member.
